# DEMANDE DE BREVET EUROPEEN

(11) **EP 4 570 458 A1**
(43) Date de publication de la demande: **18.06.2025**
(21) Numéro de dépôt: 24219740.8
(22) Date de dépôt: 13.12.2024
(51) Int. Cl.: B25J 21/02, B25J 19/00

(54) **DISPOSITIF POUR LA MANIPULATION D'ÉLÉMENTS CONTENUS DANS UNE BOÎTE À GANTS EN FORMANT UNE DOUBLE PAROI ÉTANCHE, BOÎTE À GANTS ASSOCIÉE**

(30) Priorité: 14.12.2023 FR 2314236
(71) Demandeur: Commissariat à l'Energie Atomique et aux Energies Alternatives, 75015 Paris (FR)
(72) Inventeur: NANTERMOZ, Coline, 91191 GIF-SUR-YVETTE CEDEX (FR); PERROT, Yann, 91191 GIF-SUR-YVETTE CEDEX (FR)
(74) Mandataire: Cabinet Nony

(57) **Abrégé**

Dispositif pour la manipulation d'éléments contenus dans une boîte à gants en formant une double paroi étanche, Boîte à gants associée.

L'invention consiste essentiellement à proposer une étanchéification de l'extrémité ouverte d'une manche de protection 15 lors de l'insertion d'un bras robotique ou d'un bras esclave à l'intérieur, au sein d'une boîte à gants 10.

## Description

### Domaine technique

La présente invention concerne le domaine des boites à gants, et plus particulièrement les dispositifs pour la manipulation d'éléments contenus dans une boîte à gants.

### Technique antérieure

Une boîte à gants est une enceinte hermétique dont au moins une de ses parois est transparente, l'enceinte hermétique étant adaptée pour manipuler des substances et des objets dans une atmosphère contrôlée. Les boîtes à gants sont particulièrement intéressantes lorsque les substances ou objets à manipuler sont nocifs pour l'homme ou sont contaminables, comme c'est le cas, par exemple, dans les domaines nucléaire, chimique, pharmaceutique et médical.

Une boîte à gants comporte au moins une ouverture traversante ménagée dans une de ses parois et dans laquelle un manchon souple est destiné à être monté de manière étanche, afin d'accéder aux produits et aux matériels présents à l'intérieur de la boîte à gants. Le manchon souple garantit le maintien d'une atmosphère contrôlée au sein de l'enceinte en formant une barrière hermétique à travers laquelle les éléments contenus dans l'enceinte peuvent être manipulés.

Usuellement, le manchon souple est un gant pour recevoir une main d'un opérateur.

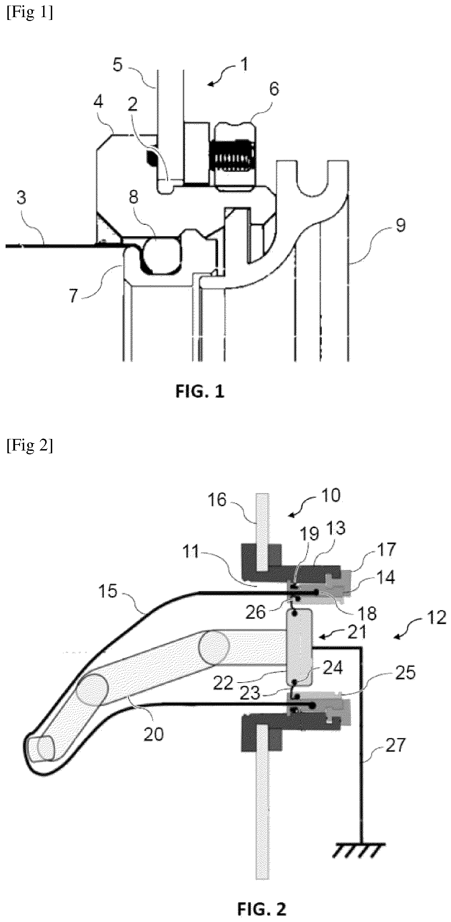

On a illustré à la figure 1 une partie d'une boîte à gants 1 comportant une ouverture traversante 2 dans laquelle est monté de manière étanche un gant 3. Le montage du gant 3 dans l'ouverture 2 est assuré par une bague d'enceinte 4 fixée sur la paroi 5 délimitant l'enceinte par pincement à l'aide d'un système de vis-écrou 6.

Une bague support 7 est montée de manière amovible sur la bague d'enceinte 4. L'extrémité du gant 3 est munie d'un bourrelet 8 qui vient se loger entre la bague support 7 et la bague d'enceinte 4. La bague support 7 compresse le bourrelet 8 contre la bague d'enceinte 4, assurant ainsi l'étanchéité du montage. Il est également connu de l'art antérieur des gants fixés dans l'ouverture d'une boîte à gants à l'aide d'une bague support et d'une bague d'enceinte, lesdits gants étant exempts de bourrelet et l'étanchéité étant assurée par des joints.

Une bague d'immobilisation 9 permet d'immobiliser la bague support 7 avec la bague d'enceinte 4.

La manipulation d'éléments contenus dans une boîte à gants à l'aide d'un gant, telle que celle illustré à la figure 1, reste dangereuse pour un opérateur.

En effet, il existe des risques d'accidents pouvant rompre l'étanchéité de la boîte à gants et donc exposer l'opérateur aux éléments nocifs qui y sont contenus. Notamment, il existe le risque de percer le gant, lors d'une manipulation.

Bien que la boîte à gants soit opaque pour les rayonnements alpha et bêta, les rayonnements gamma peuvent quant à eux être transmis à travers le gant. Aussi, les boîtes à gants utilisant un gant comme manchon souple ne présentent pas une protection optimale pour la manipulation d'éléments radioactifs par un opérateur.

En outre, certaines tâches de manipulation d'éléments contenus dans une boîte à gants par un opérateur sont rébarbatives, par exemple les tâches de maintenance préventive et/ou de nettoyage. La réalisation de ces tâches rébarbatives par un opérateur diminue le temps de travail disponible pour d'autres tâches présentant une plus haute valeur ajoutée.

Afin de surmonter au moins une partie des inconvénients précités, un bras robotique ou un télémanipulateur peut être utilisé pour la manipulation d'éléments contenus dans une boîte à gants.

Pour autant, les boîtes à gants standards ne sont pas adaptées pour l'implantation d'un bras robotique entièrement à l'intérieur de leur enceinte. En particulier, l'intérieur des boîtes à gants est généralement exigu et peut être encombré de nombreux objets. De plus, un bras robotique peut ne pas être adapté pour supporter l'atmosphère confinée des boîtes à gants, qui peut notamment être corrosive, poussiéreuse et/ou radioactive. Par ailleurs, la maintenance d'un bras robotique agencé entièrement à l'intérieur d'une boîte à gants s'avérerait très complexe.

Il est donc préférable de disposer le bras robotique hors de la boîte à gants et de l'insérer dans le manchon souple, qui est le cas échéant une manche de protection du bras robotique, afin de manipuler les éléments au sein de la boîte à gants.

De même, étant donné le fonctionnement d'un télémanipulateur, pour ces mêmes besoins de manipulation, il est nécessaire d'agencer un bras maître du télémanipulateur hors de la boîte à gants et d'insérer un bras esclave dans le manchon souple, qui est le cas échéant une manche de protection du bras esclave.

A l'instar d'un gant, la manche de protection garantit le maintien d'une atmosphère contrôlée au sein de la boîte à gants en formant une barrière hermétique entre l'intérieur de la boîte et le bras robotique ou le télémanipulateur. En outre, la manche de protection protège le bras robotique ou le télémanipulateur contre l'atmosphère confinée. Généralement, le montage de la manche de protection dans une ouverture d'une boîte à gants est similaire à celui d'un gant, par exemple au montage du gant 3 illustré à la figure 1.

En outre, même en utilisant un bras robotique ou un télémanipulateur, il existe toujours un risque de perçage de la manche de protection. Le cas échéant, le confinement de l'atmosphère contrôlée de la boîte à gants n'est plus assuré. De plus, une rupture de l'herméticité d'une manche de protection peut ne pas être détectée pendant une longue période, notamment une période plus longue que le temps de détection d'une rupture de l'herméticité d'un gant. En effet, l'opérateur peut remarquer de lui-même un perçage du gant lors d'une manipulation ou la détection peut être réalisée durant un contrôle lorsque l'opérateur quitte la zone d'intervention contenant la boîte à gants. Ces méthodes de détection d'une fuite ne conviennent pas pour une manche de protection dans laquelle est inséré un bras robotique ou un bras esclave d'un télémanipulateur durant plusieurs jours car elles ne peuvent alors pas être mises en oeuvre de manière suffisamment fréquente.

Par ailleurs, il est connu des systèmes de traversée étanche utilisés dans les cellules blindées, notamment dans le nucléaire. Ces systèmes sont par exemple mis en oeuvre pour une transmission entre le bras maître et le bras esclave d'un télémanipulateur. Toutefois, ces systèmes ne sont pas adaptés pour les boîtes à gants, car ils nécessitent une paroi épaisse et qui doit reprendre des efforts mécaniques importants, ce qui n'est pas le cas des parois d'une boîte à gants.

Il existe donc un besoin d'amélioration des dispositifs pour la manipulation d'éléments contenus dans une boîte à gants, notamment qui pallie les inconvénients précités.

En particulier, il existe un besoin pour un tel dispositif qui garantit au mieux le confinement de l'atmosphère contrôlée de la boîte à gants.

Le but de l'invention est de répondre, au moins en partie, à ce(s) besoin(s).

### Exposé de l'invention

Pour ce faire, l'invention concerne un dispositif pour la manipulation d'éléments contenus dans une boîte à gants, comprenant :
- une bague d'enceinte adaptée pour être fixée sur le bord d'une ouverture traversante ménagée dans une paroi (16) de la boîte à gants,
- une manche de protection hermétique comprenant une extrémité ouverte,
- une bague support sur laquelle est montée de manière étanche la manche de protection hermétique, la bague support étant adaptée pour s'emmancher dans la bague d'enceinte, de sorte à fixer de manière étanche la manche de protection à la bague d'enceinte,
- un bras robotique ou un bras esclave d'un télémanipulateur comprenant un obturateur, le bras robotique ou le bras esclave étant adapté pour s'insérer dans la manche de protection avec l'obturateur qui obture de manière étanche l'extrémité ouverte de la manche de protection.

De préférence, le dispositif comprend une bague d'immobilisation pour verrouiller la bague support lorsqu'emmanchée dans la bague d'enceinte.

De préférence, le bras robotique ou le bras esclave est monté sur un support de reprise d'efforts exercés par le bras robotique ou le bras esclave, le support étant adapté pour être fixé au sol, à une cloison d'une structure, telle qu'un mur ou au plafond.

De préférence, le dispositif comprend un capteur de pression destiné à être agencé dans la manche de protection obturée par l'obturateur pour détecter un changement de pression dans le volume étanche délimité par la manche de protection et l'obturateur.

De préférence, l'obturateur comprend une base, une collerette hermétique fixée de manière étanche autour de la base et un moyen de fixation étanche de la collerette à la bague support.

De préférence, la collerette est en polymère souple , de préférence en polyuréthane ou en polychlorure de vinyle.

De préférence, la collerette comprend un bourrelet intérieur logé en étant compressé dans une gorge ménagée dans la base.

De préférence, le moyen de fixation est un anneau support sur lequel est montée la collerette, l'anneau support étant adapté pour s'emmancher dans la bague support, de sorte à fixer de manière étanche la collerette à la bague support.

De préférence, l'anneau support est adapté pour venir comprimer la collerette contre la bague support de sorte à assurer l'étanchéité entre la collerette et la bague support, la collerette comprenant de préférence un bourrelet extérieur logé dans une gorge ménagée dans l'anneau support et adapté pour être compressé contre la bague support.

L'invention a également pour objet une boîte à gants comprenant :
- une ouverture traversante ménagée dans une de ses parois,
- un dispositif selon la présente invention, la bague d'enceinte étant fixée sur le bord de l'ouverture traversante et la bague support étant emmanchée dans la bague d'enceinte en fixant de manière étanche la manche de protection hermétique à la bague d'enceinte.

De préférence, la boîte comprend une entretoise adaptée pour être assemblée, de préférence par une fixation de type à baïonnette, avec l'anneau support et la base de l'obturateur du dispositif de sorte à maintenir un écartement radial, de préférence constant, entre l'anneau support et la base.

De préférence, la boîte comprend un manchon d'insertion pour guider en translation l'obturateur lors de son insertion dans la manche de protection hermétique, de préférence le manchon d'insertion étant configuré pour maintenir l'obturateur concentrique avec la bague support.

De préférence, le manchon d'insertion comprend un mécanisme apte à exercer une force de poussée sur l'obturateur, de préférence le mécanisme transformant un mouvement de rotation d'un volant en un mouvement de translation.

La présente invention consiste donc essentiellement à proposer une étanchéification de l'extrémité ouverte d'une manche de protection lors de l'insertion d'un bras robotique ou d'un bras esclave à l'intérieur, au sein d'une boîte à gants.

Ainsi, le dispositif selon l'invention permet de manipuler les éléments contenus dans une boîte à gants tout en réalisant une double paroi étanche entre l'atmosphère contrôlée de la boîte à gants et le milieu extérieur. La première paroi étanche est formée par la manche de protection et la deuxième paroi étanche est formée par un obturateur qui obture de manière étanche l'extrémité ouverte de la manche de protection.

Par-là, en cas de rupture de l'étanchéité de la manche de protection, le confinement de l'atmosphère contrôlée de la boîte à gants est toujours assuré par l'obturateur.

Contrairement aux dispositifs de l'art antérieur, le confinement de l'atmosphère contrôlée ne repose donc pas sur une unique paroi qui peut être relativement fragile et sujette à risque de perçage important. De plus, la paroi formée par l'obturateur n'est pas sujette aux risques de perçage et/ou de déchirure, notamment elle n'est pas mise en contact avec les éléments manipulés.

La manipulation des éléments contenus dans une boîte à gants peut être réalisée par le bras robotique ou le bras esclave du dispositif selon l'invention. On s'affranchit ainsi des inconvénients et des risques liés à une manipulation par un opérateur à l'aide d'un gant.

En outre, avantageusement, avec le dispositif selon l'invention, les efforts mécaniques du bras robotique ou du bras esclave ne sont pas repris par une paroi de la boîte à gants.

Par ailleurs, le dispositif est adapté aux boîtes à gants déjà existantes et ne nécessite donc pas de modification de ces dernières pour la mise en place du dispositif. Notamment, la bague d'enceinte, la bague support et la manche de protection peuvent être similaires à celles déjà existantes pour le montage d'une manche de protection dans l'ouverture d'une boîte à gants. En particulier, elles peuvent être conformes aux standards existants selon la norme ISO 11933-1.

Le dispositif selon l'invention est simple et rapide à mettre en place sur une boîte à gants. Notamment, le dispositif est adapté pour le remplacement d'un gant ou d'une manche de protection usagée par une nouvelle manche de protection sans rupture du confinement de l'atmosphère contrôlée.

### Brève description des dessins

D'autres avantages et caractéristiques ressortiront mieux à la lecture de la description détaillée, faite à titre illustratif et non limitatif, en référence aux figures suivantes :
[Fig 1] La figure 1 est une vue schématique en coupe du montage, selon l'art antérieur, d'un gant dans une ouverture d'une boîte à gants.
[Fig 2] La figure 2 est une vue schématique en coupe d'un dispositif selon l'invention monté dans une ouverture d'une boîte à gants.
[Fig 3], [Fig 4], [Fig 5], [Fig 6] et [Fig 7] Les figures 3 à 7 sont des vues schématiques en coupe montrant différentes étapes d'un procédé de mise en place d'une manche de protection d'un dispositif selon l'invention, dans une boîte à gants.
[Fig 8], [Fig 9], [Fig 10], [Fig 11], [Fig 12], [Fig 13] et [Fig 14] Les figures 8 à 14 sont des vues schématiques en coupe montrant différentes étapes d'un procédé de mise en place d'un bras robotique d'un dispositif selon l'invention, dans la manche de protection, mise en place selon les figures 3 à 7.

### Description détaillée

La figure 1 a déjà été décrite en préambule et ne le sera donc pas par la suite.

Pour des raisons de clarté, les différents éléments des figures sont représentés en échelle libre, les dimensions réelles des différentes parties n'étant pas nécessairement respectées.

On a illustré à la figure 2 une boîte à gants 10 comportant une ouverture traversante 11 et un dispositif 12 selon l'invention pour la manipulation d'éléments contenus dans la boîte à gants 10, qui est monté de manière étanche à travers l'ouverture traversante.

Le dispositif 12 comprend une bague d'enceinte 13, une bague support 14 et une manche de protection 15.

La bague d'enceinte 13 est fixée par pincement ou par soudage à une paroi 16 de la boîte à gants 10 autour de l'ouverture 11.

La manche de protection 15 est montée de manière étanche à son extrémité ouverte sur la bague support 14, elle-même 14 emmanchée de manière étanche dans la bague d'enceinte 13.

La bague support 14 peut venir se clipser dans la bague d'enceinte 13.

Le dispositif 12 comprend également une bague d'immobilisation 17 qui assure le maintien fixe de la bague support 14 emmanchée dans la bague d'enceinte 13.

Le montage étanche de la manche de protection 15 dans l'ouverture 11 peut être selon les standards existants selon la norme ISO 11933-1.

Par exemple, comme illustré à la figure 2, la manche de protection 15 peut comprendre un bourrelet 18 à son extrémité ouverte inséré de manière étanche dans la bague support 14, l'étanchéité entre la bague support 14 et la bague d'enceinte 13 étant alors assurée par un joint à lèvre 19 sur la périphérie extérieure de la bague support 14.

Selon un autre exemple, le montage de la manche de protection 15 dans l'ouverture 11 peut être similaire à celui illustré à la figure 1.

Le dispositif 12 comprend également un bras robotique 20 inséré dans la manche de protection 15 pour qu'il puisse manipuler des éléments contenus dans la boîte à gants 10.

Le bras robotique 20 comprend à sa base un obturateur 21 qui obture de manière étanche l'extrémité ouverte de la manche de protection 15. L'obturateur 21 est entouré par la bague support 14. Ainsi, le reste du bras robotique 20 est logé dans un volume hermétique délimité entre la manche de protection 15 et l'obturateur 21. En cas de perçage de la manche de protection 15, l'étanchéité du bras robotique 20 dans la boîte à gants 10 est toujours assurée par l'obturateur 21.

Un capteur de pression peut être logé dans le volume hermétique précité et ainsi détecter avantageusement une fuite éventuelle et donc détecter le perçage de la manche de protection 15.

L'obturateur 21 comprend une base 22, sur laquelle est montée le reste du bras robotique 19, et une collerette hermétique 23, fixée de manière étanche autour de la base 22.

La périphérie extérieure de la collerette 23 est fixée de manière étanche à la bague support 14.

Ainsi, la base 22 obture en partie l'extrémité ouverte de la manche de protection 15 et la collerette 23 ferme de manière étanche l'espace entre la base 22 et la bague support 14.

La collerette 23 a la forme d'un disque évidé. La périphérie intérieure de la collerette 23 comprend un bourrelet intérieur 24 logé en étant compressé dans la base 22, ce qui améliore l'étanchéité de la fixation de la collerette 23 autour de la base 20. En particulier, la base 22 peut comprendre deux platines prenant en sandwich le bourrelet intérieur 24.

L'obturateur 21 peut comprendre un anneau support 25 comme moyen de fixation de la collerette 23 avec la bague support 14. La périphérie extérieure de la collerette 23 est fixée à l'anneau support 25. Notamment, la périphérie extérieure de la collerette 23 comprend un bourrelet extérieur 26 logé dans une gorge ménagée à la périphérie extérieure de l'anneau support 25.

L'anneau support 25 est emmanché dans la bague support 14 en pressant la collerette 23 contre la bague support 14. Notamment, l'anneau support 24 peut être enfoncé dans la bague support 14 et venir en appui contre une butée de la bague support 14 faisant saillie vers son intérieur. Alternativement, la bague support 14 peut comprendre une gorge radiale intérieure et l'anneau support 25 peut comprendre une nervure sur sa périphérie extérieure de sorte à venir clipser l'anneau support 25 dans la bague support 14.

La collerette 23 est prise en sandwich entre la butée et l'anneau support 24.

Le bourrelet extérieur 26 est compressé contre la paroi interne de la bague support 14 par l'anneau support 25. Le bourrelet extérieur 26 améliore ainsi l'étanchéité de la fixation de la collerette 23 avec la bague support 14.

Le bras robotique 20 est monté sur un support 27 indépendant de la boîte à gants 10 et adapté pour la reprise au sol des efforts exercés par le bras robotique 20. Ainsi, le bras robotique 20 ne transmet pas d'effort mécanique à la paroi 16 de la boîte à gants 10.

Ce support 27 peut être adapté pour être fixé au sol, à une cloison d'une structure, telle qu'un mur ou au plafond.

Ce support 27 peut également être mobile par rapport à la boîte à gants 10, par exemple le support 27 peut comprendre des roulettes, de préférence des roulettes à frein.

Le support 27 peut comprendre un moyen élévateur pour déplacer verticalement le bras robotique 20 par rapport au sol et à la boîte à gants 10. Il est ainsi possible d'ajuster la hauteur du bras robotique 20 en fonction de la hauteur de l'ouverture 11 vis-à-vis du sol. Ce moyen élévateur peut par exemple comprendre un montant télescopique et/ou un vérin.

Le support 27 peut comprendre un moyen de fixation configuré pour fixer de manière amovible le support 27 au châssis de la boîte à gants 10.

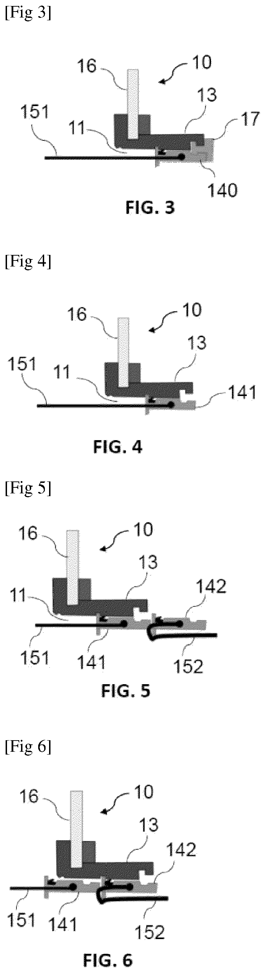

Les figures 3 à 7 montrent différentes étapes d'un procédé de mise en place d'une manche de protection 152, d'un dispositif 12 selon l'invention, dans une boîte à gants 10. Le procédé de mise en place de la manche de protection 152 dans une boîte à gants 10 est similaire aux procédures standards selon la norme ISO 11933-1.

La nouvelle manche de protection 152 est mise en place en remplaçant une autre manche de protection 151, qui est usagée ou un gant 3.

Ainsi, comme illustré à la figure 3, une manche de protection 151 usagée, à remplacer est montée de manière étanche dans une ouverture 11 d'une boîte à gants 10.

La figure 4 montre le retrait de la bague d'immobilisation 17 pour procéder au remplacement de la manche de protection 151 usagée.

Ce retrait est suivi de l'insertion de la nouvelle manche de protection 152 en emmanchant une nouvelle bague support 142 dans la bague d'enceinte 13, la nouvelle bague support 142 venant pousser l'ancienne bague support 141 jusqu'à la faire tomber à l'intérieur de la boite à gants 10. Cette étape d'insertion, illustrée aux figures 5 et 6, permet de maintenir le confinement de l'atmosphère contrôlée dans la boîte à gants 10.

L'insertion peut être réalisée à l'aide d'un manchon d'insertion, non représenté ici. Un manchon d'insertion est également dénommé « *canon d'éjection »* dans le domaine technique.

La bague support 142 à insérer et la nouvelle manche de protection 152 sont mises en place dans le manchon d'insertion. Le manchon d'insertion est verrouillé sur la bague d'enceinte 13 puis le manchon est vissé ce qui insère la bague support 142 dans la bague d'enceinte 13. Une fois le manchon en butée, l'insertion de la nouvelle bague support 142 et de la nouvelle manche de protection 152 est terminée. Le manchon d'insertion peut être configuré de sorte qu'en fin sa course, en position de butée, la bague support 142 se clipse dans la bague d'enceinte 13. Le manchon d'insertion est ensuite dévissé de la bague d'enceinte 13 puis retiré.

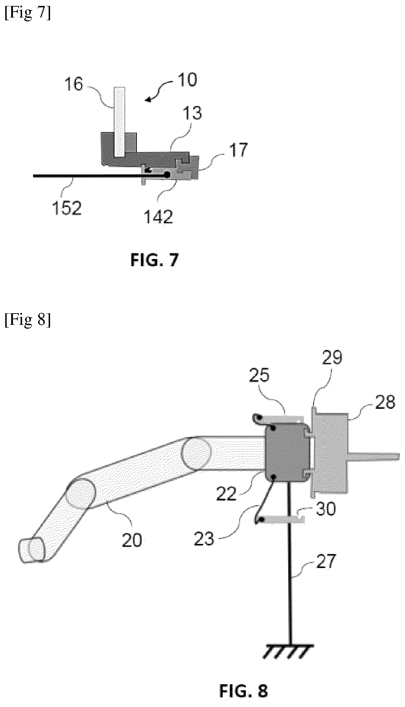

Une fois la bague support 142 emmanchée dans la bague d'enceinte 13, la bague d'immobilisation 17 est remise en place bloquant ainsi la bague support 142 dans la bague d'enceinte 13, comme montré à la figure 7.

Les figures 8 à 14 montrent différentes étapes d'un procédé de mise en place d'un bras robotique 20 dans une manche de protection 15, d'un dispositif 12 selon l'invention.

Initialement, comme représenté à la figure 8, l'anneau support 25 n'est lié à la base 22 que par la collerette 23. Aussi, l'anneau support 25 pend en prenant appui contre la base 22. L'écartement entre l'anneau support 25 et la base 22 n'est alors pas constant.

Afin de maintenir un écartement radial constant entre l'anneau support 25 et la base 22, facilitant l'emmanchement de l'anneau support 25 dans la bague support 14, on réalise la fixation de l'anneau support 25 à une entretoise 28.

Pour ce faire, l'entretoise 28 peut comprendre des pions 29 et l'anneau support 25 peut comprendre des rainures 30 ménagées en son sein, les pions 29 et les rainures 30 constituant un système de fixation à baïonnette, qui permet de fixer l'anneau support 25 à l'entretoise 28.

L'entretoise 28 est agencée de manière concentrique par rapport à la base 22. L'anneau support 25 présente alors un écartement radial constant avec la base 22 et la collerette 23 est étirée uniformément.

L'entretoise 28 peut également être fixée à la base 22, par exemple par fixation à baïonnette. Alternativement, l'entretoise 28 peut ne pas être fixée à la base 22, et peut par exemple se présenter sous la forme d'un manchon entourant la base 22.

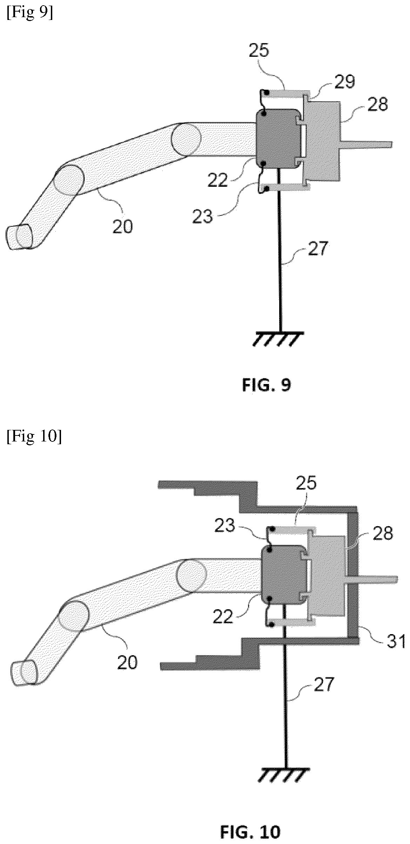

Le montage de l'entretoise 28 est suivi de la mise en place d'un obturateur 21 et de l'entretoise 28 dans un manchon d'insertion 31, comme illustré à la figure 10.

Le manchon d'insertion 31 est ensuite positionné autour de la bague d'enceinte 13 en venant en appui contre la bague d'enceinte 13 ou contre la paroi 16 de la boîte à gants 10.

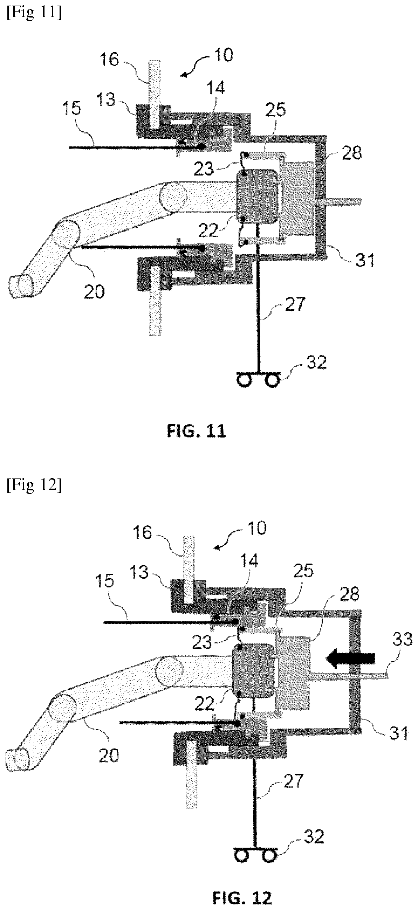

La figure 11 montre le manchon d'insertion 31 positionné autour de la bague d'enceinte 13. L'obturateur 21 est alors centré par rapport à la bague d'enceinte 13 et à la bague support 14. On évite ainsi que l'obturateur 21 ne vienne pousser la bague support 14 lors de son insertion dans cette dernière.

Le bras robotique 20 est inséré dans la manche de protection 15 puis l'obturateur 21 est translaté dans la bague support 14 en étant guidé par le manchon d'insertion 31.

On a illustré à la figure 12 la translation de l'obturateur 21 dans la bague support 14. Afin de faciliter l'insertion du bras robotique 20, le support 27 comprend des roulettes 32. La translation de l'obturateur 21 peut être réalisée en poussant l'entretoise 28. Notamment, l'entretoise 28 peut comprendre une tige filetée 33 à visser dans le corps du manchon d'insertion 31, par exemple à l'aide d'un volant non représenté ici.

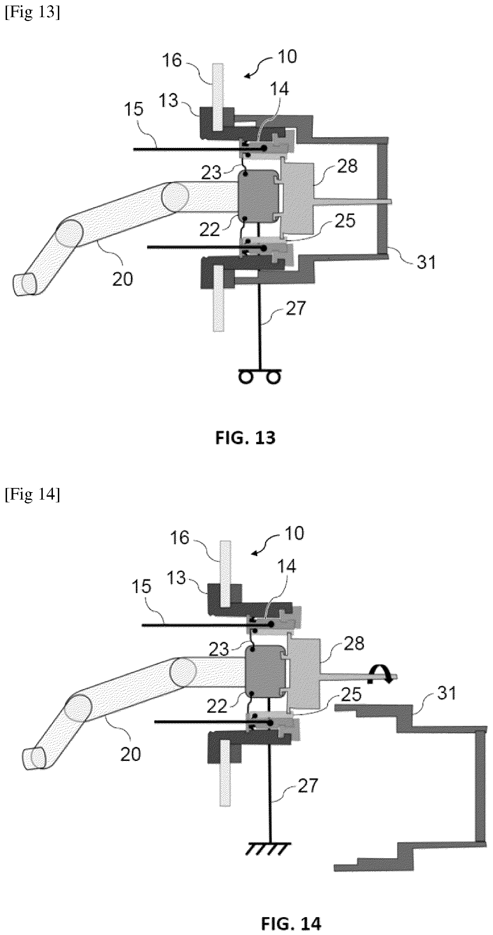

Comme cela est représenté à la figure 13, la translation de l'obturateur 21 s'arrête lorsque l'anneau support 25 vient en appui contre une butée de la bague support 14en saillie vers l'intérieur. L'obturateur 21 obture alors de manière étanche la manche de protection 15. Alternativement, la tige filetée 33 ou le manchon d'insertion 31 peut comprendre une butée à partir de laquelle la tige filetée 33 est bloquée et ne peut plus se visser davantage dans le manchon d'insertion 31, mettant fin à la poussée de l'entretoise 28.

Une fois le bras robotique 20 inséré dans la manche de protection 15 avec l'étanchéité réalisée par l'obturateur 21, le support 27 est fixé par rapport à la boîte à gants 10. Par exemple, le support 27 peut comprendre un moyen de fixation au châssis de la boîte à gants 10 et/ou les roulettes 32 peuvent comprendre des freins qui sont enclenchés.

Le manchon d'insertion 31 peut ensuite être retiré. Puis, l'entretoise 28 peut également être retirée, notamment par rotation, par exemple d'un quart de tour, comme illustré à la figure 14.

Si la manche de protection 15 est intègre et donc assure toujours le confinement de l'atmosphère contrôlée de la boîte à gants 10, le retrait du bras robotique 20 de la manche de protection 15 et de l'intérieur de la boîte à gants 10 peut s'effectuer en réalisant, dans l'ordre inverse, les étapes du procédé d'insertion décrites précédemment.

Une fois le bras robotique 20 enlevé, la manche de protection 15 peut être remplacée par une nouvelle manche de protection 15 ou un gant 3 similairement au procédé illustré aux figures 3 à 7.

Si la manche de protection 15 est percée, alors le confinement de l'atmosphère contrôlée de la boîte à gants 10 est garanti tant que l'obturateur 21 obture la manche de protection 15.

Le cas échéant, au moins deux procédés de remplacement de la manche de protection 15 sont envisageables.

Un premier procédé de remplacement consiste à pousser l'ensemble comprenant la bague support 14, la manche de protection 15 et le bras robotique 20 dans la boîte à gants 10, après retrait de la bague d'immobilisation 17. Cette poussée est réalisée simultanément à un emmanchement de la nouvelle bague support 14, sur laquelle est monté(e) un gant 3 ou une nouvelle manche de protection 15, dans la bague d'enceinte 13. Ce premier procédé comprend préalablement à la poussée de l'ensemble, une étape de déconnection entre le bras robotique 20 et le support 27. Ce premier procédé peut être réalisé similairement au procédé décrit pour le figures 3 à 7. Une fois poussé à l'intérieur de la boîte à gants 10, le bras robotique 20 est considéré comme un déchet pouvant être évacué.

Un deuxième procédé de remplacement comprend le retrait du bras robotique 20 hors de la manche de protection 15 suivi du remplacement de la manche de protection 15 selon une méthode usuelle de remplacement d'un gant percé. Le bras robotique 20 peut être décontaminé pour être réutilisé.

D'autres variantes et améliorations peuvent être envisagées sans pour autant sortir du cadre de l'invention.

Par exemple, le bras robotique 20 peut être remplacé par un bras esclave d'un télémanipulateur. Le cas échéant, la base 22 de l'obturateur 21 peut être adaptée pour transmettre les mouvements du bras maître du télémanipulateur au bras esclave.

Selon un autre exemple, le bourrelet extérieur 26 peut être inséré de manière étanche dans l'anneau support 25 et l'étanchéité entre l'anneau support 25 et la bague support peut être assurée par un joint à lèvre entourant l'anneau support 25.

## Revendications

1. Dispositif (12) pour la manipulation d'éléments contenus dans une boîte à gants (10), comprenant :
- une bague d'enceinte (13) adaptée pour être fixée sur le bord d'une ouverture traversante (11) ménagée dans une paroi (16) de la boîte à gants,
- une manche (15) de protection hermétique comprenant une extrémité ouverte,
- une bague support (14) sur laquelle est montée de manière étanche la manche de protection hermétique, la bague support étant adaptée pour s'emmancher dans la bague d'enceinte, de sorte à fixer de manière étanche la manche de protection à la bague d'enceinte,
- un bras robotique (20) ou un bras esclave d'un télémanipulateur comprenant un obturateur (21), le bras robotique ou le bras esclave étant adapté pour s'insérer dans la manche de protection avec l'obturateur qui obture de manière étanche l'extrémité ouverte de la manche de protection.

2. Dispositif selon la revendication 1, comprenant une bague d'immobilisation (17) pour verrouiller la bague support lorsqu'emmanchée dans la bague d'enceinte.

3. Dispositif selon l'une des revendications précédentes, le bras robotique ou le bras esclave étant monté sur un support (27) de reprise d'efforts exercés par le bras robotique ou le bras esclave, le support étant adapté pour être fixé au sol, à une cloison d'une structure, telle qu'un mur ou au plafond.

4. Dispositif selon l'une des revendications précédentes, comprenant un capteur de pression destiné à être agencé dans la manche de protection obturée par l'obturateur pour détecter un changement de pression dans le volume étanche délimité par la manche de protection et l'obturateur.

5. Dispositif selon l'une des revendications précédentes, l'obturateur comprenant une base (22), une collerette hermétique (23) fixée de manière étanche autour de la base et un moyen de fixation étanche de la collerette à la bague support.

6. Dispositif selon la revendication 5, la collerette étant en polymère souple, de préférence en polyuréthane ou en polychlorure de vinyle.

7. Dispositif selon la revendication 5 ou 6, la collerette comprenant un bourrelet intérieur (24) logé en étant compressé dans une gorge ménagée dans la base.

8. Dispositif selon l'une des revendications 5 à 7, le moyen de fixation étant un anneau support (25) sur lequel est montée la collerette, l'anneau support étant adapté pour s'emmancher dans la bague support, de sorte à fixer de manière étanche la collerette à la bague support.

9. Dispositif selon la revendication 8, l'anneau support étant adapté pour venir comprimer la collerette contre la bague support de sorte à assurer l'étanchéité entre la collerette et la bague support, la collerette comprenant de préférence un bourrelet extérieur (26) logé dans une gorge ménagée dans l'anneau support et adapté pour être compressé contre la bague support.

10. Boîte à gants (10) comprenant :
- une ouverture traversante (11) ménagée dans une de ses parois (16),
- un dispositif (12) selon l'une des revendications précédentes, la bague d'enceinte (13) étant fixée sur le bord de l'ouverture traversante et la bague support (14) étant emmanchée dans la bague d'enceinte en fixant de manière étanche la manche de protection hermétique (15) à la bague d'enceinte.

11. Boîte à gants selon la revendication 10, le dispositif étant selon l'une des revendication 8 et 9, la boîte comprenant une entretoise (28) adaptée pour être assemblée, de préférence par une fixation de type à baïonnette, avec l'anneau support (25) et la base (22) de sorte à maintenir un écartement radial, de préférence constant, entre l'anneau support et la base.

12. Boîte à gants selon la revendication 10 ou 11, comprenant un manchon d'insertion (31) pour guider en translation l'obturateur (21) lors de son insertion dans la manche de protection hermétique (15), de préférence le manchon d'insertion étant configuré pour maintenir l'obturateur concentrique avec la bague support (14).

13. Boîte à gants selon la revendication 12, le manchon d'insertion comprenant un mécanisme apte à exercer une force de poussée sur l'obturateur, de préférence le mécanisme transformant un mouvement de rotation d'un volant en un mouvement de translation.
